# EUROPEAN PATENT APPLICATION

(11) **EP 2 078 638 A2**
(43) Date of publication of application: **15.07.2009**
(21) Application number: 09000186.8
(22) Date of filing: 09.01.2009
(51) Int. Cl.: B60R 1/00, B60R 1/06, E02F 9/26

(54) **Construction equipment having side mirror fixing means**

(30) Priority: 11.01.2008 KR 20080003307
(71) Applicant: Volvo Construction Equipment Holding Sweden AB, 631 85 Eskilstuna (SE)
(72) Inventor: Kim, Sang Deuk, Changwon-si Gyeongsangnam-do (KR)
(74) Representative: Schmidt, Sven Hendrik

(57) **Abstract**

Construction equipment having a side mirror fixing means is provided, in which a ball of a ball joint (13) for rotatably fixing a side mirror (14) to a structure of the equipment and its supporting parts are mounted on the outside of the side mirror (14), so that an operator can confirm with the naked eye and manage on the occurrence of release or gap of a fastening bolt (25). The construction equipment having a side mirror fixing means includes a lower driving structure; an upper frame mounted on the lower driving structure to be swiveled; a cap and an engine room mounted in front and in the rear of the upper frame, respectively; working devices rotatably connected to the upper frame, and composed of a boom, an arm, and a bucket driven by hydraulic cylinders, respectively; a counter weight mounted in the rear of the upper frame to keep the balance of the equipment during working; a side mirror (14) used to provide a backward view of the equipment to an operator; a ball joint (13) rotatably fixing the side mirror (14) to a front structure of the equipment; and a fixing means rotatably fixing the side mirror to an outer surface of a ball of the ball joint (13) so that the ball of the ball joint (13) is positioned on an outer side of the side mirror (14).

## Description

### CROSS-REFERENCE TO RELATED APPLICATION

This application is based on and claims priority from Korean Patent Application No. 10-2008-0003307, filed on January 11, 2008 in the Korean Intellectual Property Office, the disclosure of which is incorporated herein in its entirety by reference.

### BACKGROUND OF THE INVENTION

### Field of the invention

The present invention relates to construction equipment having a side mirror fixing means that rotatably mounts a side mirror on the side of the equipment, such as an excavator, so that an operator can secure a backward view of the equipment.

More particularly, the present invention relates to construction equipment having a side mirror fixing means, in which a ball of a ball joint for rotatably fixing a side mirror to a structure of the equipment and its supporting parts are mounted on the outside of the side mirror, so that an operator can confirm with the naked eye and manage on the occurrence of release or gap of a fastening bolt.

### Description of the Prior Art

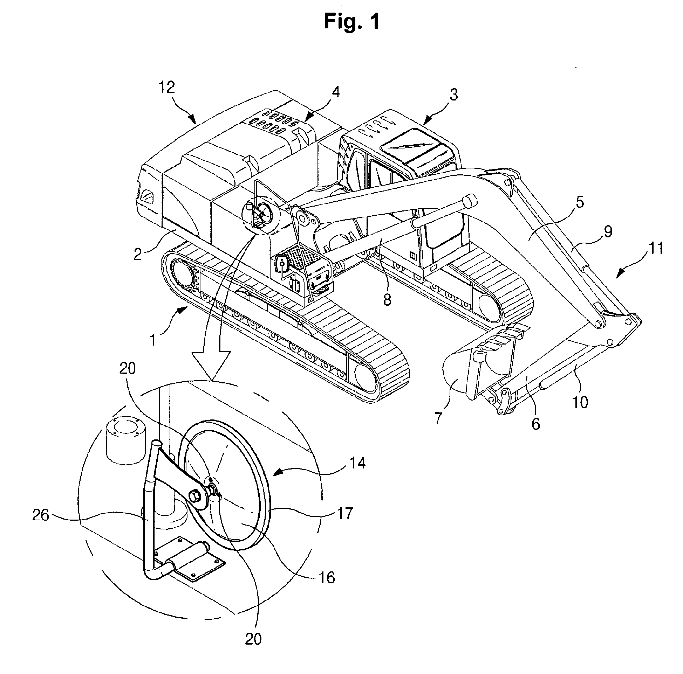

As illustrated in FIG. 1, conventional construction equipment having a side mirror fixing means includes a lower driving structure 1; an upper frame 2 mounted on the lower driving structure 1 to be swiveled; a cap 3 and an engine room 4 mounted in front and in the rear of the upper frame 2, respectively; working devices 11 rotatably connected to the upper frame 2, and composed of a boom 5, an arm 6, and a bucket 7 driven by hydraulic cylinders 8, 9, and 10, respectively; a counter weight 12 mounted in the rear of the upper frame 2 to keep the balance of the equipment during working; and a side mirror 14 rotatably mounted by a ball joint 13 fixed to a structure (e.g. a mirror stay 26) in front of the equipment so that an operator can secure a backward view of the equipment.

The conventional side mirror fixing means includes a streamlined mirror 15 and a frame 16 supporting the mirror; a ring-shaped packing surrounding the edges of the mirror 15 and the frame to support them; a ball joint 13 rotatably fixing the side mirror 14 to the structure of the equipment; a pair of holders 19 rotatably surrounding the outside of a ball of the ball joint 13 inside the frame 16; and fastening bolts fixing the holders 19 to the frame 16.

According to the conventional side mirror fixing means, however, the ball of the ball joint 13 is rotatably coupled to the inside of the side mirror 14, and thus an operator cannot confirm with the naked eye whether the release or gap of the fastening bolts 20 has occurred. If the torque of the fastening bolts 20 is weak (which corresponds to a state where the fastening bolts 20 are not completely fastened), a gap occurs between head portions of the fastening bolts 20 and an outer surface of the frame 16.

Accordingly, due to impact, vibration or stress, shaking of the side mirror 14 itself, and the like, being transferred during traveling or working of the equipment, the fastening bolts 20 fixing the side mirror 14 may be released to secede from the frame or a fixing part of the side mirror 14 to the ball joint 13 may be easily cracked.

Also, in the case of fixing the holders 19 to the frame 16 by the fastening bolts 20 so as to rotatably supporting the ball of the ball joint 13, the frame 16, which is a thin plate having a low strength and a vulnerable structure, may be crushed to be depressed or damaged due to the increasing torque when the fastening bolts 20 are fastened.

### SUMMARY OF THE INVENTION

Accordingly, the present invention has been made to solve the above-mentioned problems occurring in the prior art, and an object of the present invention is to provide construction equipment having a side mirror fixing means, in which a ball of a ball joint for rotatably fixing a side mirror to a structure of the equipment and its supporting parts are mounted on the outside of the side mirror, so that an operator can confirm with the naked eye whether a release or gap of the fastening bolt has occurred.

Another object of the present invention is to provide construction equipment having a side mirror fixing means, which can prevent a fixing part of the side mirror from being damaged when fastening members are released due to impact, vibration, or stress, being transferred during traveling or working of the equipment, as torque of the fastening members for fixing the side mirror is increased.

In order to accomplish these objects, there is provided construction equipment having a side mirror fixing means, according to an embodiment of the present invention, which includes a lower driving structure; an upper frame mounted on the lower driving structure to be swiveled; a cap and an engine room mounted in front and in the rear of the upper frame, respectively; working devices rotatably connected to the upper frame, and composed of a boom, an arm, and a bucket driven by hydraulic cylinders, respectively; a counter weight mounted in the rear of the upper frame to keep the balance of the equipment during working; a side mirror used to provide a backward view of the equipment to an operator; a ball joint rotatably fixing the side mirror to a front structure of the equipment; and a fixing means rotatably fixing the side mirror to an outer surface of a ball of the ball joint so that the ball of the ball joint is positioned on an outer side of the side mirror.

In a preferred embodiment of the present invention, the ball joint may be fixed to a mirror stay mounted on the upper frame.

The fixing means may include a first plate mounted on an inner surface of a frame supporting a streamlined mirror, and having a groove formed thereon to support the ball of the ball joint; a fastening nut fixed to an inner surface of the first plate; a second plate pressingly supporting the ball of the ball joint against the first plate; and a fixing bolt fixed to the fastening nut, passing through the first and second plates, so that the ball of the ball joint can be rotatably supported by the first and second plates.

The fixing means may further include a spacer fixedly interposed between the first and second plates so as to increase torque of the fastening bolt.

### BRIEF DESCRIPTION OF THE DRAWINGS

The above and other objects, features and advantages of the present invention will be more apparent from the following detailed description taken in conjunction with the accompanying drawings, in which:
FIG. 1 is a schematic view illustrating conventional construction equipment having a side mirror fixing means;
FIG. 2 is a sectional view of a side mirror fixing means as illustrated in FIG. 1;
FIG. 3 is a view illustrating main parts of the side mirror fixing means as illustrated in FIG. 1;
FIG. 4 is a sectional view of a side mirror fixing means according to an embodiment of the present invention;
FIG. 5 is a perspective view illustrating main parts of the side mirror fixing means as illustrated in FIG. 4; and
FIG. 6 is a view illustrating the use state of the side mirror fixing means as illustrated in FIG. 4.

### DETAILED DESCRIPTION OF THE PREFERRED EMBODIMENTS

Hereinafter, preferred embodiments of the present invention will be described with reference to the accompanying drawings. The matters defined in the description, such as the detailed construction and elements, are nothing but specific details provided to assist those of ordinary skill in the art in a comprehensive understanding of the invention, and thus the present invention is not limited thereto.

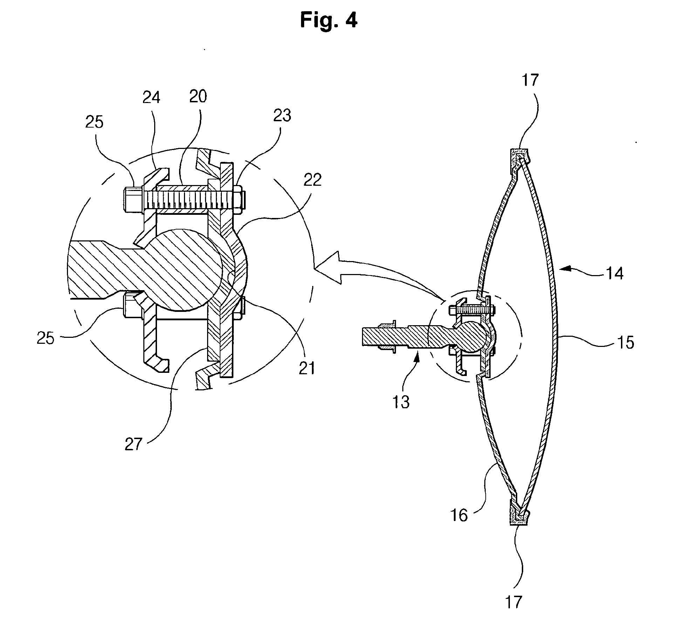

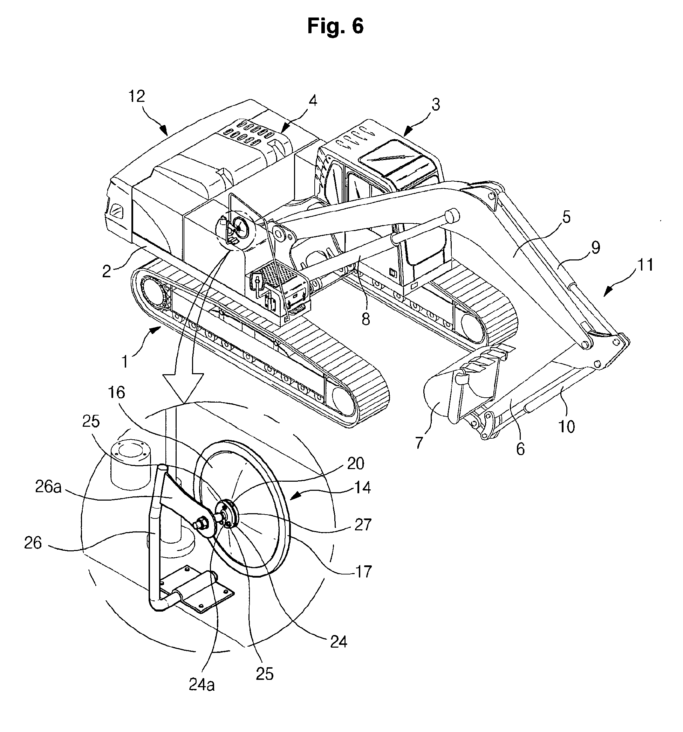

As illustrated in FIGS. 4 to 6, construction equipment having a side mirror fixing means according to an embodiment of the present invention includes a lower driving structure 1; an upper frame 2 mounted on the lower driving structure 1 to be swiveled; a cap 3 and an engine room 4 mounted in front and in the rear of the upper frame 2, respectively; working devices 11 rotatably connected to the upper frame 2, and composed of a boom 5, an arm 6, and a bucket 7 driven by hydraulic cylinders 8, 9, and 10, respectively; a counter weight 12 mounted in the rear of the upper frame 2 to keep the balance of the equipment during working; a side mirror 14 used to provide a backward view of the equipment to an operator in the cab 3; a ball joint 13 rotatably fixing the side mirror 14 to a front structure of the equipment; and a fixing means rotatably fixing the side mirror 14 to an outer surface of a ball (i.e. sphere) of the ball joint 13 so that the ball of the ball joint 13 is positioned on an outer side of the side mirror 14.

The fixing means may include a first plate 22 mounted on an inner surface of a frame 16 supporting a streamlined mirror 15, and having a groove 21 formed thereon to support the ball of the ball joint 13; a fastening nut 23 fixed to an inner surface of the first plate 22; a second plate 24 pressingly supporting the ball of the ball joint 13 against the first plate 22; and a fixing bolt 25 fixed to the fastening nut 23, passing through the first and second plates 22 and 24, so that the ball of the ball joint 13 can be rotatably supported by the first and second plates 22 and 24.

Although not illustrated in the drawing, the ball joint 13 may be fixed to a mirror stay 26 mounted on the upper frame 2.

The fixing means may further include a spacer 20 fixedly interposed between the first and second plates 22 and 24 so as to increase torque of the fastening bolt 25.

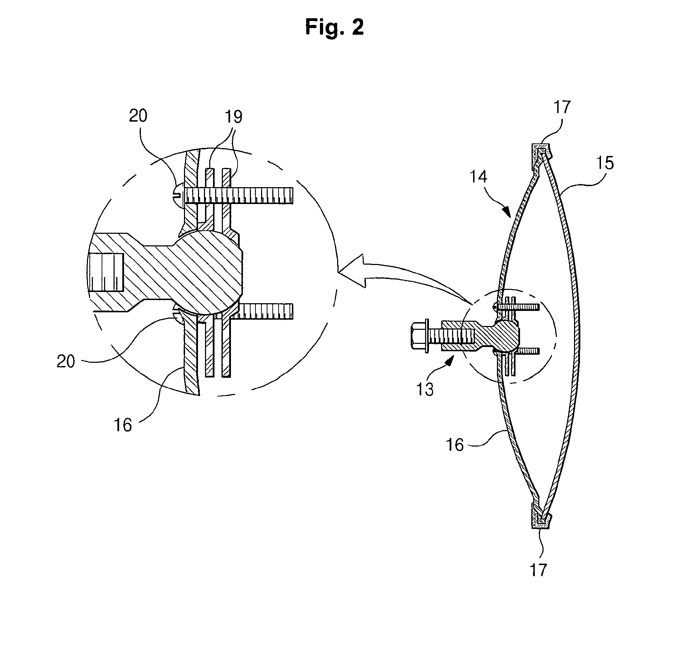

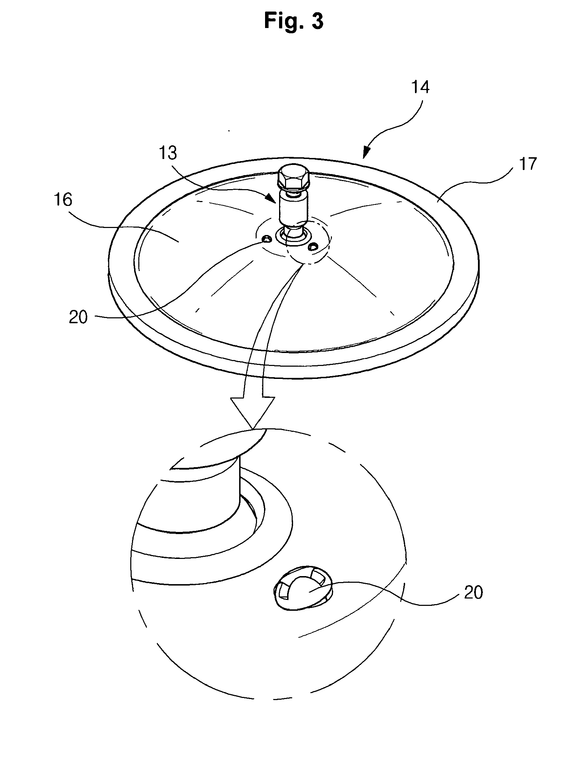

The construction of the construction equipment having the side mirror fixing means according to an embodiment of the present invention, except for the fixing means rotatably fixing the side mirror 14 to the outer surface of the ball of the ball joint 13 so that the ball of the ball joint 13 is positioned on the outer side of the side mirror 14, is substantially the same as that as illustrated in FIGS. 1 to 3, the detailed description thereof will be omitted. The same reference numerals are used for the same elements across various figures.

Hereinafter, the construction equipment having a side mirror fixing means according to an embodiment of the present invention will be described in detail with reference to the accompanying drawings.

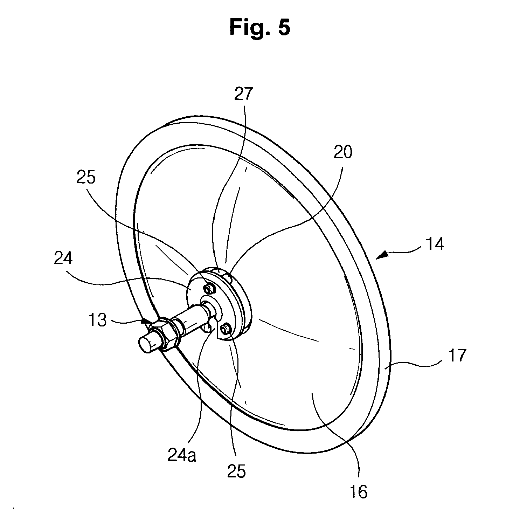

As illustrated in FIGS. 4 and 5, a body of the ball joint 13 is fixed to a bracket 26a of the mirror stay 26 that is mounted on the upper frame 2 of the equipment such as an excavator. On the inner surface of the frame 16 that forms the streamlined mirror 14, the first plate 22 is placed (the diameter of the first plate 22 is larger than the diameter of a through hole formed on the frame 16). In this case, the fastening nut 23 is fixed in advance to the inner side of the first plate 22 by welding.

The ball of the ball joint 13, which is supported by the groove 21 formed on the first plate 22, is pressingly supported by the second plate 24. As the fastening bolt 25, passing through the first and second plates 22 and 24, is fixed to the fastening nut 23, the side mirror 14 can be rotatably supported against the ball of the ball joint 13.

In this case, by a plate 27 that overlaps the outer surface of the first plate 22, the ball of the ball joint 13 can be rotatably supported.

On the other hand, by fixedly interposing the spacer 20 having a specified length (which is determined in accordance with the diameter of the ball of the ball joint 13) between the first and second plates 22 and 24, the torque of the fastening bolt 25 can be increased.

Accordingly, the fastening bolt 25 is prevented from being released due to impact, vibration, or shaking of the side mirror 14 that is transferred from the equipment during working or traveling of the equipment.

Even in the case of increasing the torque of the fastening bolt 25 that is fixed to the fastening nut 23, the torque of the fastening bolt 25 is not directly transferred to the frame 16 of the thin plate having a vulnerable structure, and thus the frame 16 is prevented from being crushed to be depressed.

As the ball of the ball joint 13 is rotatably supported on the outer surface of the frame 16 of the side mirror 14, an operator can confirm with the naked eye whether the fastening bolt 25 is released. That is, in the case where the fastening bolt 25 is released or a gap occurs between the fastening bolt 20 and the frame 16, the operator can confirm with the naked eye whether the fastening bolt 25 is released and repair (or re-fix) the fastening bolt 25, so that the damage of the fixing part of the side mirror 14 due to the impact, vibration, or stress being transferred during working can be prevented.

As described above, the construction equipment having a side mirror fixing means according to an embodiment of the present invention has the following advantages.

Since the ball of the ball joint for rotatably fixing the side mirror and its supporting parts are mounted on the outside of the side mirror, the operator can confirm with the naked eye whether the release or gap of the fastening bolt has occurred, and repair or re-fix the fastening bolt, so that the damage of the fixing part of the side mirror due to the impact, vibration, or stress being transferred during working can be prevented.

Also, the release of the fastening bolt or the gap occurrence between the fastening bolts and the frame due to the impact, vibration, or stress, which is transferred during working of the equipment, as the torque of the fastening members for fixing the side mirror is increased can be prevented.

Also, even in the case of increasing the torque of the fastening bolt, the frame of the thin plate having a vulnerable structure is prevented from being crushed to be depressed or damaged, and thus the durability of the side mirror fixing means can be improved.

Although preferred embodiments of the present invention have been described for illustrative purposes, those skilled in the art will appreciate that various modifications, additions and substitutions are possible, without departing from the scope and spirit of the invention as disclosed in the accompanying claims.

## Claims

1. Construction equipment having a side mirror fixing means, comprising:
a lower driving structure;
an upper frame mounted on the lower driving structure to be swiveled;
a cap and an engine room mounted in front and in the rear of the upper frame, respectively;
working devices rotatably connected to the upper frame, and composed of a boom, an arm, and a bucket driven by hydraulic cylinders, respectively;
a counter weight mounted in the rear of the upper frame to keep the balance of the equipment during working;
a side mirror used to provide a backward view of the equipment to an operator; a ball joint rotatably fixing the side mirror to a front structure of the equipment; and
a fixing means rotatably fixing the side mirror to an outer surface of a ball of the ball joint so that the ball of the ball joint is positioned on an outer side of the side mirror.

2. The construction equipment of claim 1, wherein the fixing means comprises:
a first plate mounted on an inner surface of a frame supporting a streamlined mirror, and having a groove formed thereon to support the ball of the ball joint;
a fastening nut fixed to an inner surface of the first plate;
a second plate pressingly supporting the ball of the ball joint against the first plate; and
a fixing bolt fixed to the fastening nut, passing through the first and second plates, so that the ball of the ball joint can be rotatably supported by the first and second plates.

3. The construction equipment of claim 2, whrein the fixing means further comprises a spacer fixedly interposed between the first and second plates so as to increase torque of the fastening bolt.

4. The construction equipment of claim 1 or 2, wherein the ball joint is fixed to a mirror stay mounted on the upper frame.
